# FASCICULE DE BREVET EUROPEEN

(11) **EP 1 910 979 B1**
(45) Date de publication et mention de la délivrance du brevet: **04.04.2012**
(21) Numéro de dépôt: 06777846.4
(22) Date de dépôt: 19.07.2006
(51) Int. Cl.: G06K 17/00, G09F 9/30, G06Q 30/00

(54) **ETIQUETTE ELECTRONIQUE COMPORTANT DES MOYENS POUR LIRE ET AFFICHER LE CONTENU DE PUCES RFID**
MIT MITTELN ZUM LESEN UND ANZEIGEN EINES RFID-CHIPINHALTS AUSGESTATTETES ELEKTRONISCHES LABEL
ELECTRONIC LABEL PROVIDED WITH MEANS FOR READING AND DISPLAYING A RFID CHIP CONTENT

(30) Priorité: 19.07.2005 FR 0507641
(43) Date de publication de la demande: 16.04.2008
(73) Titulaire: STORE ELECTRONIC SYSTEMS, 95100 Argenteuil (FR)
(72) Inventeur: CATTEAU, Philippe, F-92200 Neuilly sur Seine (FR)
(74) Mandataire: Le Forestier, Eric
(86) Numéro de dépôt international: PCT/EP2006/064398
(87) Numéro de publication internationale: WO 2007/009999

(56) Documents cités:
- EP-A2- 0 944 014
- US-A- 5 793 029
- US-A1- 2004 099 735
- US-A1- 2004 210 495
- US-B1- 6 362 738
- US-B1- 6 601 764

## Description

L'invention concerne les étiquettes électroniques, destinées à des systèmes d'affichage notamment de prix et de données de gestion dans une surface de vente.

Les systèmes d'affichage ont pour objet essentiel de permettre, au niveau des rayonnages d'un site tel qu'un hypermarché, supermarché ou tout autre surface de vente (par exemple pharmacie, etc.), de présenter aux consommateurs, pour chaque article à la vente, un prix dont on sait qu'il correspond de façon fiable au prix tel qu'il figure dans le fichier central du magasin, c'est-à-dire au prix qu'il sera effectivement utilisé en caisse pour le paiement de l'article. D'autre part, de tels systèmes permettent de réaliser des changements de prix automatisés dans des délais beaucoup plus courts qu'avec un affichage manuel, que ce soit pour des périodes particulières de promotion dans le magasin, pour tout ou partie des articles, pour répercuter des changements de tarifs, pour faire face à des situations d'inflation où les prix doivent être augmentés très fréquemment, etc.

Une étiquette électronique destinée à un tel système d'affichage est généralement connue sous le nom d'étiquette électronique de gondole EEG. Une telle étiquette EEG comporte typiquement un écran d'affichage (par exemple sous la forme d'un écran LCD), une mémoire dans laquelle des données à afficher sont destinées à être stockées, ainsi qu'un microprocesseur notamment adapté pour commander l'affichage des données stockées en mémoire.

Des codes barres sont généralement apposés sur les produits en magasin, notamment pour permettre leur identification. Toutefois, le besoin pour une traçabilité des produits étant de plus en plus important, les codes barres sont à terme appelés à disparaître au profit d'un moyen d'identification plus performant, à savoir les puces d'identification par radiofréquence RFID.

Chaque puce RFID possède un numéro identifiant unique, et chaque produit sur lequel une telle puce est apposée est donc susceptible de pouvoir être identifié unitairement. Outre l'information d'identifiant du produit sur lequel il est apposé, une puce RFID peut présenter les informations suivantes : date de fabrication, lieu de fabrication, nom du fournisseur, nom du transporteur, numéro de conteneur, numéro de palette, temps de transit, unité de vente, unité de conditionnement, température de conservation, traitement produit, date de mise en rayon, etc.

Bien entendu cette liste n'est bien pas exhaustive, tant les données intéressantes pour chacune des étapes de transformation ou de déplacement sont importante pour chacun des intervenants.

On notera qu'il y a lieu de distinguer entre les puces « passives » accessibles uniquement en lecture et les puces « actives » accessibles à la fois en écriture et en lecture.

Afin de pouvoir accéder aux informations contenues dans une puce RFID, on utilise un appareil lecteur spécifiquement prévu pour l'interrogation de puces RFID, ce lecteur étant généralement associé à un afficheur pour permettre de visualiser les informations lues.

Le lecteur et l'afficheur associé peuvent être intégrés dans un terminal portable destiné à être utilisé par les employés d'un magasin affectés à la collecte de telles informations RFID. Mais il est alors nécessaire que chacun de ces employés dispose en permanence d'un tel terminal. Il en découle un coût d'équipement des employés potentiellement important. Par ailleurs, l'employé doit toujours transporter ce terminal, ce qui peut s'avérer malcommode (risque de perte, encombrement, etc.).

Le lecteur et l'afficheur associé peuvent également être intégrés dans une borne destinée à être installée dans un magasin. L'employé doit alors déplacer le produit jusqu'à la borne pour avoir accès aux informations contenues dans la puce tag RFID associée au produit. Une telle opération peut s'avérer pénible pour l'employé, notamment lorsqu'elle est fréquemment répétée (distance du rayonnage jusqu'à la borne, poids du produit). En tout état de cause, il en découle une perte de temps.

La demande de brevet US 2004/0099735 A1 décrit un système d'affichage de prix dans une surface de vente disposant d'un serveur central et d'étiquettes électroniques réparties dans la surface de ventes. Les étiquettes disposent de moyens de communication sans fil grâce auxquels elles peuvent échanger des informations avec le serveur central. En particulier, les informations en provenance du serveur central peuvent être affichées sur l'écran des étiquettes.

D'autre part des puces RFID associées aux produits en vente peuvent être interrogées par les moyens de communication sans fil de l'étiquette qui est positionnée en correspondance avec les produits.

La demande de brevet US 2004/0099735 A1 ne propose toutefois pas que les informations d'une puce RFID puissent être mises à l'affichage sur l'écran d'une étiquette électronique.

La demande de brevet US 2004/0210495 A1 décrit une étiquette électronique couplée à un interrogateur RFID pour lire des informations contenues dans une puce RFID. Cette étiquette électronique n'intègre pas le moyen de lecture RFID, qui est typiquement monté sur les étagères de la surface de vente.

La demande de brevet US 2004/0210495 A1 ne prévoit pas de réaliser une mise à l'affichage sur l'écran de l'étiquette électronique des informations lues sur une puce RFID apposée sur un produit.

Il existe donc un besoin pour un dispositif permettant de relever les informations contenues dans des puces RFID apposées sur des produits qui ne présente pas les inconvénients susmentionnés de l'état de la technique.

L'invention a pour objectif de répondre à ce besoin et propose à cet effet une étiquette électronique destinée à un système d'affichage notamment de prix dans une surface de vente, comportant un écran d'affichage, une mémoire dans laquelle des données à afficher sont destinées à être stockées, des moyens d'interfaçage avec un serveur central du système d'affichage, ainsi qu'une unité de traitement adaptée pour contrôler le stockage en mémoire des données transmises par le serveur central par l'intermédiaire des moyens d'interfaçage, et pour commander l'affichage des données stockées en mémoire sur l'écran d'affichage, comportant en outre des moyens de lecture des informations contenues dans une puce d'identification par radiofréquence RFID, et caractérisée en ce que l'unité de traitement est en outre adaptée pour commander la lecture par lesdits moyens de lecture des informations contenues dans une puce RFID et le stockage desdites informations lues dans la mémoire, de telle sorte que les informations d'une puce RFID peuvent être affichées sur l'écran d'affichage de l'étiquette électronique sur commande de l'unité de traitement.

Certains aspects préférés, mais non limitatifs, de cette étiquette sont les suivants :
- les moyens de lecture RFID sont des moyens de lecture de proximité adaptés pour pouvoir lire le contenu d'une puce RFID approchée à proximité desdits moyens de lecture ;
- elle comporte des moyens de contrôle de la distance de lecture des moyens de lecture RFID, et l'unité de traitement est en outre adaptée pour commander lesdits moyens de contrôle de la distance de lecture ;
- elle comporte des moyens de détection de la présence d'une puce RFID dans son champ de lecture ;
- la mémoire comprend un premier emplacement réservé au stockage des données en provenance du serveur central du système d'affichage, et un deuxième emplacement réservé au stockage des données lues depuis une ou plusieurs puces RFID ;
- la mise à l'affichage des informations contenues dans une puce RFID est commandée par l'unité de traitement, une fois un ordre de mise à l'affichage passé à ladite unité de traitement par l'intermédiaire des moyens d'interfaçage ;
- la mise à l'affichage des informations contenues dans une puce RFID est réalisée de manière automatique par l'unité de traitement ;
- l'unité de traitement est en outre adaptée pour commander la mise en veille, et réciproquement l'activation, des moyens de lecture, une fois un ordre de mise en veille ou d'activation passé à ladite unité de traitement par l'intermédiaire des moyens d'interfaçage ;
- l'unité de traitement est en outre adaptée pour commander une mise à l'affichage temporisée desdites informations RFID ;
- l'unité de traitement est en outre adaptée pour traiter les informations RFID stockées dans la mémoire ;
- l'unité de traitement est en outre adaptée pour transmettre les informations RFID stockées dans la mémoire au serveur central, et pour recevoir du serveur central des informations annexes desdites informations RFID pour stockage et/ou traitement et/ou affichage ;
- l'adresse de l'étiquette correspond à tout ou partie de l'identifiant de la puce RFID.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma d'une étiquette selon un mode de réalisation possible de l'invention ;
- la figure 2 illustre le type d'informations lues depuis une puce RFID et susceptibles d'être mises à l'affichage sur une étiquette conforme à l'invention.

L'invention a pour objectif de permettre la mise à disposition d'informations relatives aux produits disposés dans une surface de vente aux employés et/ou aux clients de cette surface. Il s'agit plus précisément d'offrir un outil permettant la gestion des rayons (connaissance de l'identifiant d'un produit, inventaire, réapprovisionnement, etc.), ainsi que la localisation et la traçabilité des produits.

Les informations « produit » concernées par l'invention sont plus précisément des informations contenues dans une puce d'identification radiofréquence RFID reportée sur un produit.

Par extension, il s'agit également d'informations stockées sur un serveur central du système d'affichage (du type prix, avantages fidélité, etc.) et qui sont susceptibles d'être mises à disposition après lecture d'informations annexes contenues dans une puce RFID.

L'invention propose un nouveau type d'étiquette électronique de gondole. Des moyens de lecture de puces RFID sont intégrés à l'étiquette selon l'invention de manière à permettre la lecture du contenu de la puce RFID et l'affichage de ce contenu, ou encore d'informations dérivées de ce contenu (par exemple soit par calcul, soit en récupérant des informations annexes stockées au niveau du serveur), sur l'écran de l'étiquette.

Toutes les étiquettes électroniques du système d'affichage d'une surface de vente peuvent être des étiquettes conformes à l'invention. Bien entendu, il est possible de prévoir que certaines seulement des étiquettes électroniques installées dans une surface de vente soient conformes à l'invention, par exemple une étiquette conforme à l'invention par tablette, ou une par gondole, ou encore une par allée.

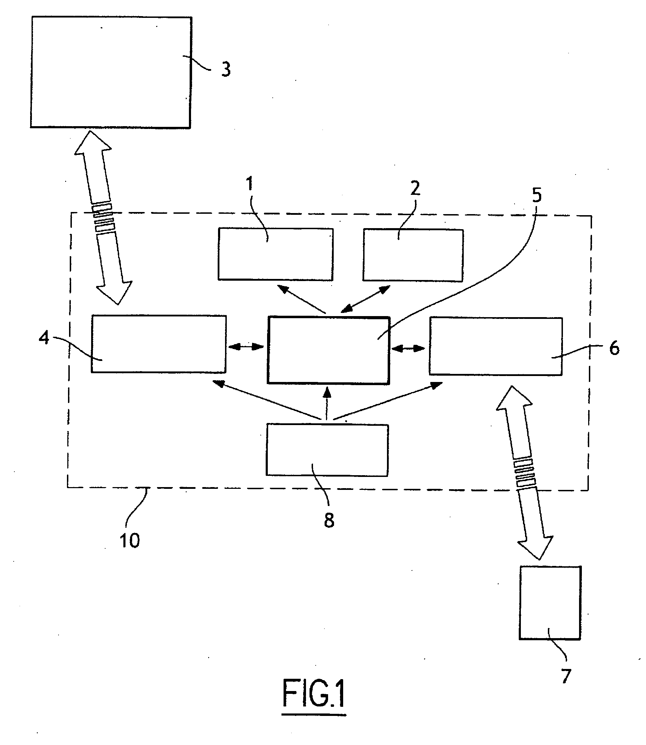

En référence à la figure 1, on a représenté de manière schématique une étiquette électronique 10 conforme à un mode de réalisation possible de l'invention.

L'étiquette 10 selon l'invention comporte un écran d'affichage 1, typiquement sous la forme d'un écran LCD. L'écran peut présenter une ou plusieurs zones pour permettre l'affichage simultané de plusieurs informations.

L'étiquette 10 comporte en outre une mémoire 2 dans laquelle des données à afficher sont destinées à être stockées. La mémoire peut bien entendu être constituée de différentes zones mémoires, chaque zone pouvant être affectée au stockage d'un type particulier de données. A titre d'exemple, la mémoire d'une étiquette EEG classique, du type de celle proposée par la Demanderesse, peut comporter 13 zones mémoire différentes.

Le système d'affichage comporte un serveur central 3 relié, par exemple par l'intermédiaire d'une liaison sans fil, à l'ensemble des étiquettes du système d'affichage de la surface de vente. On rappelle ici que le système d'affichage peut comporter à la fois des étiquettes conformes à l'état de la technique, et des étiquettes conformes à la présente invention.

Des moyens 4 d'interfaçage avec le serveur central 3 sont prévus au niveau de l'étiquette 10 (par exemple des moyens adaptés pour assurer une liaison sans fil) pour permettre l'échange de données entre l'étiquette 10 et le serveur central 3.

On précise que les moyens d'interfaçage 4 ne sont pas limités à l'échange de données entre l'étiquette 10 et le serveur central 3, mais s'étendent également à l'échange de données entre l'étiquette 10 et un terminal portable ou une télécommande spécialement prévus à cet effet.

L'unité de traitement 5 est adaptée pour contrôler le stockage en mémoire 2 des données transmises à l'étiquette 10 par le serveur central 3 par l'intermédiaire des moyens d'interfaçage 4, et pour commander l'affichage des données stockées en mémoire sur l'écran d'affichage 1.

Outre des informations destinées à être stockées dans la mémoire, le serveur central 3 peut passer des « ordres » à l'étiquette 10 par l'intermédiaire des moyens formant interface 4, ces ordres étant interprétés et mis en oeuvre par l'unité de traitement 5.

A cet effet, différents modes de communication sont prévus entre le serveur central 3 et les différentes étiquettes 10 conformes à l'invention du système d'affichage.

Un premier mode de communication consiste en l'envoi d'un message unique par le serveur central 3 à destination d'une seule étiquette 10. Un tel message unique peut bien entendu être envoyé à plusieurs étiquettes, ces dernières étant alors adressées les unes après les autres.

Un autre mode de communication consiste en l'envoi d'un message semi-générique à destination d'un ensemble d'étiquettes.

Encore un autre mode de communication consiste en l'envoi d'un message générique à destination de l'ensemble des étiquettes.

Revenant à la description de l'étiquette 10, celle-ci comporte en outre des moyens de lecture 6 des informations contenues dans une puce 7 d'indentification par radiofréquence RFID.

Les moyens de lecture RFID 6 peuvent être des moyens de lecture de proximité adaptés pour pouvoir lire le contenu d'une puce RFID approchée à proximité desdits moyens de lecture. Par « proximité », on entend typiquement une distance de l'ordre de quelques millimètres à quelques centimètres.

On notera qu'associés aux moyens de lecture, l'étiquette 10 peut comporter des moyens de détection de la présence d'une puce RFID dans son champ de lecture.

Par ailleurs, l'étiquette 10 peut également comporter des moyens (non représentés) de contrôle de la distance de lecture des moyens de lecture RFID 6, l'unité de traitement 5 étant adaptée pour commander lesdits moyens de contrôle de la distance de lecture.

Les moyens de contrôle de la distance de lecture peuvent être commandés pour varier la puissance ou la fréquence des moyens de lecture RFID de manière à varier la distance de lecture.

A titre d'exemple, une faible puissance permet de définir un mode de lecture de proximité, de l'ordre de quelques millimètres à quelques centimètres. L'utilisation d'une forte puissance ou l'utilisation d'une gamme de fréquences différentes permettent une lecture éloignée, typiquement de l'ordre de plusieurs dizaines de centimètres à quelques mètres.

Une lecture de « proximité » n'autorise la lecture du contenu d'une puce RFID apposée sur un produit qu'en passant volontairement ce produit à proximité de l'étiquette 10.

Une lecture « éloignée » permet de lire automatiquement le contenu de plusieurs tags RFID, typiquement l'ensemble des tags apposés sur des produits disposés sur une même étagère. De manière préférentielle, lorsque ce mode de lecture « éloignée » est mis en oeuvre, l'étiquette 10 comporte des moyens de gestion des conflits entre les réponses des différentes puces RFID qui sont interrogées par l'étiquette, car présentes dans le champ de lecture des moyens de lecture.

Dans le cadre d'une lecture de proximité, il est possible qu'un produit et donc la puce RFID associée soient situés à proximité de l'étiquette 10, déclenchant ainsi la lecture permanente du contenu de la puce. Il en découle une consommation d'énergie continue, et potentiellement importante. Par ailleurs, lorsque l'unité de traitement 5 est prévue pour afficher le contenu d'une puce RFID dès lors que ladite puce est dans le champ de lecture des moyens de lecture, les informations contenues dans la puce seront affichées de manière permanente sur l'écran d'affichage, au détriment des données EEG classiques (typiquement informations de prix) pourtant nécessaires au consommateur.

Afin de remédier à ces inconvénients, l'invention propose que l'unité de traitement 5 soit adaptée pour que le contenu d'une même puce RFID (à laquelle est associé un identifiant unitaire) ne puisse être lu plus d'un certain nombre de fois (paramétrable) à la suite. Dans un tel cas de figure, les moyens de lecture RFID sont commandés par l'unité de traitement 5 de sorte à être mis en veille pendant une durée déterminée, ou encore en attendant la lecture d'une puce présentant un autre identifiant.

En complément ou non, l'invention propose que l'unité de traitement 5 soit en outre adaptée pour commander la mise en veille, et réciproquement l'activation, des moyens de lecture 6, une fois un ordre de mise en veille ou d'activation passé à ladite unité de traitement par l'intermédiaire des moyens d'interfaçage 4. Cet ordre de mise en veille/activation peut être émis à distance par le serveur central ou à proximité par une terminal portable ou une télécommande prévus pour dialoguer avec l'étiquette.

A titre d'exemple, les moyens de lecture RFID peuvent être activés le matin avant l'ouverture du magasin au public, et mis en veille une fois le magasin ouvert.

Un autre exemple est celui de l'activation à distance ou à proximité des moyens de lecture, ces derniers étant en veille dans leur état normal.

L'unité de traitement 5 de l'étiquette 10 est en outre adaptée pour commander le stockage des informations lues par lesdits moyens de lecture 6 dans la mémoire 2, de telle sorte que les informations d'une puce RFID peuvent être affichées sur l'écran d'affichage de l'étiquette 10 sur commande de l'unité de traitement 5.

En stockant les informations RFID dans la mémoire 2 de l'étiquette 10, la mise à l'affichage de ces données sur l'écran 1 peut ainsi être réalisée de la même manière que pour les autres données (i.e. les données classiquement affichées par une étiquette EEG de l'état de la technique et provenant typiquement du serveur central) sous le contrôle de l'unité de traitement 5.

La mise à l'affichage peut ainsi être déclenchée par une commande (passage d'un ordre de mise à l'affichage des informations RFID) provenant du serveur central 3 (notamment par une liaison sans fil), une commande provenant d'un dispositif du type terminal portable ou télécommande classiquement utilisé pour contrôler une étiquette EEG de l'état de la technique.

Il peut également s'agir d'une mise à l'affichage réalisée de manière automatique, l'unité de traitement étant adaptée pour automatiquement commander la mise à l'affichage, par exemple dès lors qu'une puce RFID est passée à proximité de l'étiquette selon l'invention, ou encore selon une temporisation définie.

Les informations RFID peuvent être mises à l'affichage de manière statique (affichage figé) ou dynamique (par défilement ou en alternance avec d'autres informations).

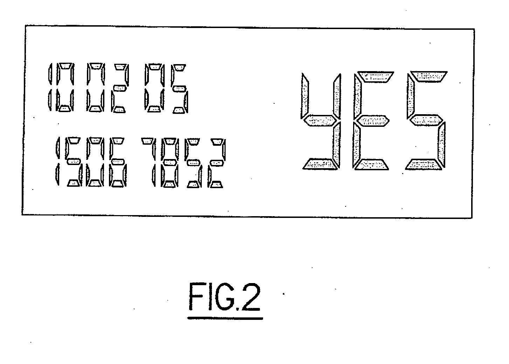

On a représenté sur la figure 2, un exemple de mise à l'affichage sur l'écran d'informations contenues dans une puce RFID. Les informations sont ici mises à l'affichage trois zones d'affichage distinctes de l'écran, et représentent respectivement :
- le respect de la chaîne du froid (« YES ») ;
- la date limite de vente du produit (« 10 02 05 » ;
- l'identifiant de la puce RFID (« 15067852 »).

Les informations RFID peuvent ainsi affichées sur l'écran 3 et être représentées soit par du texte, soit par des symboles (dédiés ou non à ces informations RFID), soit en reprenant les digits, segments et symboles classiquement utilisés dans une étiquette EEG de l'état de la technique.

Selon un mode de réalisation particulier de l'invention, la mémoire peut comprendre un premier emplacement réservé au stockage des données en provenance du serveur central 3 (données EEG classiques), et un deuxième emplacement réservé au stockage des informations lues depuis une ou plusieurs puces RFID (informations RFID).

Ces premier et deuxième emplacements peuvent bien entendu comprendre une ou plusieurs des « zones mémoires » constituant la mémoire 2 dont il a été fait état précédemment.

L'unité de traitement 5 est en outre adaptée pour permettre de commander l'affichage de données stockées en mémoire 2 suivant une séquence déterminée, c'est-à-dire en prévoyant de mettre successivement à l'affichage, pour une durée déterminée, certaines des informations stockées dans la mémoire 2. On peut par exemple prévoir d'afficher en succession des informations de prix (données EEG classiques) puis des informations RFID. On peut également prévoir d'afficher en même temps sur l'écran des données EEG et des informations RFID, en utilisant pour cela un écran disposant de plusieurs zones d'affichage.

Bien entendu, l'unité de traitement 5 possède des capacités de traitement des données stockées en mémoire, et peut donc réaliser des calculs aussi bien à partir de données EEG classiques et que d'informations informations RFID.

De telles capacités de traitement permettent à l'étiquette 10 de calculer elle-même une information sans qu'il soit nécessaire de la lui faire passer.

Ces capacités de calcul peuvent ainsi être utilisées, de manière classique en soi, pour traiter les données communiquées à l'étiquette par le serveur central 3 du système d'affichage. Un exemple de calcul réalisé sur des données EEG classiques est celui de la conversion de monnaies.

Dans le cadre de la présente invention, ces capacités de calcul sont avantageusement exploitées pour traiter les informations RFID, par exemple afin de réaliser un inventaire (comptage d'un nombre de produits), déterminer le temps passé par un produit sur une étagère, déterminer un temps restant avant la date limite de consommation, etc.

Ces capacités de traitement peuvent en outre être exploitées pour que la lecture d'une puce RFID entraîne, comme déjà mentionné précédemment, le rapatriement d'informations annexes stockées sur le serveur central et l'affichage des informations ainsi rapatriées (prix, avantages fidélité, etc.).

Selon un mode de réalisation particulier de l'invention, l'adresse d'une étiquette 10 (utilisée pour l'adressage d'une étiquette notamment en vue du passage d'un ordre et/ou d'une transmission de données par le serveur central 3) correspond à tout ou partie de l'identifiant de la puce RFID d'un produit associé à l'étiquette.

Sur une étagère de surface de vente, on présente typiquement plusieurs produits de la même référence article. L'invention prévoit que la puce RFID associée à une produit dispose d'un identifiant RFID comportant une partie générique, commune à l'ensemble des produits de la même référence article, et une partie unique permettant d'identifier unitairement ledit produit (notamment à des fins de traçabilité).

Dans un tel cas de figure, l'invention prévoit que l'adresse de l'étiquette 10 corresponde à la partie générique des identifiants des produits auxquels l'étiquette est associée.

Il est bien entendu possible de prévoir que l'adresse de l'étiquette corresponde à l'intégralité de l'identifiant d'un produit, auquel cas un rattachement informatique est utilisé afin de lier les autres produits (même référence article) à cette étiquette.

En outre, l'étiquette 10 comprend une source d'alimentation 8, par exemple sous la forme d'une ou plusieurs piles, ou encore une source d'énergie de type photovoltaïque.

De manière avantageuse, dans le cadre de la présente invention, la source d'alimentation 8 permet d'alimenter en énergie à la fois l'unité de traitement 5, les moyens d'interfaçage 4 et les moyens de lecture RFID 6.

L'étiquette 10 est typiquement logée dans un boîtier, et de manière avantageuse les moyens 6 de lecture RFID sont intégrés dans ce boîtier. Dans un tel cas de figure, il n'est pas nécessaire de prévoir un boîtier spécifique pour accueillir les moyens de lecture 6. Les moyens de lecture 6 ne sont alors pas visibles depuis l'extérieur, ce qui contribue à améliorer, ou tout du moins à ne pas détériorer, l'esthétisme des rayons de la surface de vente.

Bien entendu, l'invention n'est pas limitée à une telle intégration et s'étend également au cas où les moyens de lecture 6 sont disposés à l'extérieur du boîtier de l'étiquette.

Dans l'hypothèse où les moyens 6 de lecture RFID sont intégrés au boîtier de l'étiquette 10, un signe distinctif peut alors être rapporté sur le boîtier pour permettre d'identifier celles des étiquettes de la surface de vente qui, conformes à la présente invention, comprennent de tels moyens de lecture et sont aptes notamment à permettre la lecture et l'affichage d'informations contenues dans une puce RFID.

On précise enfin que l'intérêt premier de l'étiquette selon l'invention est la mise à disposition d'informations produits aux équipes magasin. L'invention prévoit également que certaines données soient accessibles aux consommateurs, soit par lecture de la puce RFID d'un produit manipulé par le consommateur pour l'approcher de l'étiquette, soit par interrogation de la mémoire (et notamment d'une zone mémoire dans laquelle sont stockées des informations RFID accessibles aux consommateurs), par exemple à l'aide d'une télécommande, ou en venant presser un bouton prévu à cet effet sur le boîtier de l'étiquette.

A titre d'exemple, les informations suivantes peuvent être lues sur une puce RFID et affichées à l'écran :
- date limite de vente (DLV)
- date limite de consommation (DLC)
- indicateur de rupture de la chaîne du froid

Egalement à titre d'exemple, on relèvera qu'à l'aide des moyens d'interfaçage 4 avec le serveur central 3, l'utilisateur (consommateur ou employé) peut présenter un produit équipé d'une puce RFID 7 devant l'étiquette 10 et se faire confirmer sur l'écran 1 le prix de vente dudit produit. Ainsi, les moyens d'interface, le serveur central, l'unité de traitement, l'écran et la mémoire de l'étiquette électronique sont mis à profit pour afficher le prix d'un article autre qui celui initialement associé à l'étiquette.

## Revendications

1. Etiquette électronique (10) destinée à un système d'affichage notamment de prix et de données de gestion dans une surface de vente, comportant un écran d'affichage (1), une mémoire (2) dans laquelle des données à afficher sont destinées à être stockées, des moyens d'interfaçage (4) avec un serveur central (3) du système d'affichage, ainsi qu'une unité de traitement (5) adaptée pour contrôler le stockage en mémoire (2) des données transmises par le serveur central (3) par l'intermédiaire des moyens d'interfaçage (4), et pour commander l'affichage des données stockées en mémoire (2) sur l'écran d'affichage (1),
comportant en outre des moyens de lecture (6) des informations contenues dans une puce (7) d'identification par radiofréquence RFID, et **caractérisée en ce que** l'unité de traitement (5) est en outre adaptée pour commander la lecture par lesdits moyens de lecture (6) des informations contenues dans une puce RFID (7) et le stockage desdites informations lues dans la mémoire (2), de telle sorte que les informations d'une puce RFID (7) peuvent être affichées sur l'écran d'affichage (1) de l'étiquette électronique (10) sur commande de l'unité de traitement (5).

2. Etiquette selon la revendication 1, **caractérisée en ce que** les moyens de lecture RFID (6) sont des moyens de lecture de proximité adaptés pour pouvoir lire le contenu d'une puce RFID (7) approchée à proximité desdits moyens de lecture (6).

3. Etiquette selon la revendication 1, caractérisée en qu'elle comporte des moyens de contrôle de la distance de lecture des moyens de lecture RFID, et en ce que l'unité de traitement (5) est en outre adaptée pour commander lesdits moyens de contrôle de la distance de lecture.

4. Etiquette selon la revendication précédente, **caractérisée en ce qu'**elle comporte des moyens de détection de la présence d'une puce RFID dans son champ de lecture.

5. Etiquette selon l'une des revendications précédentes, **caractérisée en ce que** la mémoire (2) comprend un premier emplacement réservé au stockage des données en provenance du serveur central du système d'affichage, et un deuxième emplacement réservé au stockage des données lues depuis une ou plusieurs puces RFID.

6. Etiquette selon l'une des revendications précédentes, **caractérisée en ce que** la mise à l'affichage des informations contenues dans une puce RFID (7) est commandée par l'unité de traitement (5), une fois un ordre de mise à l'affichage passé à ladite unité de traitement (5) par l'intermédiaire des moyens d'interfaçage (4).

7. Etiquette selon l'une des revendications 1 à 5, **caractérisée en ce que** la mise à l'affichage des informations contenues dans une puce RFID (7) est réalisée de manière automatique par l'unité de traitement (5).

8. Etiquette selon l'une des revendications précédentes, **caractérisée en ce que** l'unité de traitement (5) est en outre adaptée pour commander la mise en veille, et réciproquement l'activation, des moyens de lecture (6), une fois un ordre de mise en veille ou d'activation passé à ladite unité de traitement (5) par l'intermédiaire des moyens d'interfaçage (4).

9. Etiquette selon l'une des revendications précédentes, **caractérisée en ce que** l'unité de traitement (5) est en outre adaptée pour commander une mise à l'affichage temporisée desdites informations RFID.

10. Etiquette selon l'une des revendications précédentes, **caractérisée en ce que** l'unité de traitement (5) est en outre adaptée pour traiter les informations RFID stockées dans la mémoire (2).

11. Etiquette selon l'une des revendications précédentes, **caractérisée en ce que** l'unité de traitement (5) est en outre adaptée pour transmettre les informations RFID stockées dans la mémoire (2) au serveur central, et pour recevoir du serveur central des informations annexes desdites informations RFID pour stockage et/ou traitement et/ou affichage.

12. Etiquette selon l'une des revendications précédentes, **caractérisé en ce que** l'adresse de ladite étiquette correspond à tout ou partie de l'identifiant de la puce RFID.

## Claims

1. An electronic label (10) for a system for displaying in particular prices and management data in a sales area, comprising a display screen (1), a memory (2) for storing data to be displayed, interface means (4) for interfacing with a central server (3) of the display system, and a processing unit (5) which is designed to control the storage in the memory (2) of the data transmitted by the central server (3) via the interface means (4) and to order the display of the data stored in the memory (2) on the display screen (1),
further comprising reading means (6) for reading the information contained in a radiofrequency identification chip or RFID chip (7),
and **characterised in that** the processing unit (5) is also designed to order the reading by said reading means (6) of the information contained in an RFID chip (7) and the storage in the memory (2) of said information that has been read, so that the information from an RFID chip (7) can be displayed on the display screen (1) of the electronic label (10) at the request of the processing unit (5).

2. A label according to claim 1, **characterised in that** the RFID reading means (6) are proximity reading means which are designed to be able to read the content of an RFID chip (7) which is brought close to said reading means (6).

3. A label according to claim 1, **characterised in that** it comprises means for controlling the reading distance of the RFID reading means, and **in that** the processing unit (5) is also designed to control said means for controlling the reading distance.

4. A label according to the preceding claim, **characterised in that** it comprises means for detecting the presence of an RFID chip within its reading range.

5. A label according to one of the preceding claims, **characterised in that** the memory (2) comprises a first location reserved for the storage of the data coming from the central server of the display system, and a second location reserved for the storage of the data read from one or more RFID chips.

6. A label according to one of the preceding claims, **characterised in that** the displaying of the information contained in an RFID chip (7) is ordered by the processing unit (5) once a display command has been sent to said processing unit (5) via the interface means (4).

7. A label according to one of claims 1 to 5, **characterised in that** the displaying of the information contained in an RFID chip (7) is carried out automatically by the processing unit (5).

8. A label according to one of the preceding claims, **characterised in that** the processing unit (5) is also designed to order the standby, and reciprocally the activation, of the reading means (6) once a standby or activation command has been sent to said processing unit (5) via the interface means (4).

9. A label according to one of the preceding claims, **characterised in that** the processing unit (5) is also designed to order a timed display of said RFID information.

10. A label according to one of the preceding claims, **characterised in that** the processing unit (5) is also designed to process the RFID information stored in the memory (2).

11. A label according to one of the preceding claims, **characterised in that** the processing unit (5) is also designed to transmit the RFID information stored in the memory (2) to the central server, and to receive from the central server supplementary information relating to said RFID information for storage and/or processing and/or display.

12. A label according to one of the preceding claims, **characterised in that** the address of said label corresponds to all or part of the identifier of the RFID chip.

## Patentansprüche

1. Elektronische Kennzeichnung (10) für ein Anzeigesystem, insbesondere zur Anzeige von Preisen und von Verwaltungsdaten an einer Verkaufsfläche, aufweisend: einen Anzeigebildschirm (1), einen Speicher (2), in welchem Daten zur Anzeige gespeichert sind, Schnittstellenmittel (4) zum Ausbilden einer Schnittstelle mit einem Zentralserver (3) des Anzeigesystems, und eine Verarbeitungseinheit (5), die angepasst ist, die Speicherung der Daten in dem Speicher (2), die von dem Zentralserver (3) über die Schnittstellenmittel (4) übermittelt werden, zu steuern und die Anzeige der in dem Speicher (2) gespeicherten Daten an dem Anzeigebildschirm (1) zu steuern, wobei die elektronische Kennzeichnung weiterhin aufweist: Auslesemittel (6) zum Auslesen von Informationen, die in einem RFID-Chip (7) enthalten sind, **dadurch gekennzeichnet, dass** die Verarbeitungseinheit (5) weiterhin angepasst ist, über die Auslesemittel (6) das Auslesen von Informationen, die in einem RFID-Chip (7) enthalten sind, und die Speicherung der ausgelesenen Informationen in dem Speicher (2) derart zu steuern, dass die Informationen von einem RFID-Chip (7) auf dem Anzeigebildschirm (1) der elektronischen Kennzeichnung (10) auf Anweisung der Verarbeitungseinheit (5) angezeigt werden können.

2. Kennzeichnung gemäß Anspruch 1, **dadurch gekennzeichnet, dass** die RFID-Auslesemittel (6) Nahauslesemittel sind, die angepasst sind, den Inhalt eines RFID-Chips (7) auslesen zu können, der in die Nähe der Auslesemittel (6) gelangt.

3. Kennzeichnung gemäß Anspruch 1, **dadurch gekennzeichnet, dass** sie Steuermittel zur Steuerung des Ausleseabstands der RFID-Auslesemittel umfasst, und dass die Verarbeitungseinheit (5) weiterhin angepasst ist, die Steuermittel zur Steuerung des Ausleseabstands anzuweisen.

4. Kennzeichnung gemäß dem vorangehenden Anspruch, **dadurch gekennzeichnet, dass** sie Erfassungsmittel zur Erfassung des Vorliegens eines RFID-Chips in ihrem Auslesefeld umfasst.

5. Kennzeichnung gemäß einem der vorangehenden Ansprüche, **dadurch gekennzeichnet, dass** der Speicher (2) einen ersten Speicherplatz, der zur Speicherung der Daten, die von dem Zentralserver des Anzeigesystems kommen, reserviert ist, und einen zweiten Speicherplatz, der zur Speicherung der ausgelesenen Daten von einem oder von mehreren RFID-Chips reserviert ist, umfasst.

6. Kennzeichnung gemäß einem der vorangehenden Ansprüche, **dadurch gekennzeichnet, dass** das Anzeigen der Informationen, die in einem RFID-Chip (7) enthalten sind, durch die Verarbeitungseinheit (5) angewiesen wird, sobald ein Anzeigebefehl an die Verarbeitungseinheit (5) über die Schnittstellenmittel (4) ergangen ist.

7. Kennzeichnung gemäß einem der Ansprüche 1 bis 5, **dadurch gekennzeichnet, dass** das Anzeigen der Informationen, die in einem RFID-Chip (7) enthalten sind, automatisch über die Verarbeitungseinheit (5) realisiert wird.

8. Kennzeichnung gemäß einem der vorangehenden Ansprüche, **dadurch gekennzeichnet, dass** die Verarbeitungseinheit (5) weiterhin angepasst ist, den Stand-by-Modus und umgekehrt den Aktivierungsmodus der Auslesemittel (6) zu anzuweisen, sobald ein Stand-by-Modus- oder ein Aktivierungsbefehl an die Verarbeitungseinheit (5) über die Schnittstellenmittel (4) ergangen ist.

9. Kennzeichnung gemäß einem der vorangehenden Ansprüche, **dadurch gekennzeichnet, dass** die Verarbeitungseinheit (5) darüber hinaus angepasst ist, eine verzögerte Anzeige der RFID-Informationen zu anzuweisen.

10. Kennzeichnung gemäß einem der vorangehenden Ansprüche, **dadurch gekennzeichnet, dass** die Verarbeitungseinheit (5) darüber hinaus angepasst ist, die in dem Speicher (2) gespeicherten RFID-Informationen zu verarbeiten.

11. Kennzeichnung gemäß einem der vorangehenden Ansprüche, **dadurch gekennzeichnet, dass** die Verarbeitungseinheit (5) weiterhin angepasst ist, die in dem Speicher (2) gespeicherten RFID-Informationen an den Zentralserver zu übertragen und von dem Zentralserver Informationen zu erhalten, die den RFID-Informationen zur Speicherung und/oder Verarbeitung und/oder Anzeige beigefügt sind.

12. Kennzeichnung gemäß einem der vorangehenden Ansprüche, **dadurch gekennzeichnet, dass** die Adresse der Kennzeichnung ganz oder teilweise dem Kennzeichen des RFID-Chips entspricht.
